# EUROPEAN PATENT APPLICATION

(11) **EP 3 916 248 A1**
(43) Date of publication of application: **01.12.2021**
(21) Application number: 20176693.8
(22) Date of filing: 27.05.2020
(51) Int. Cl.: F16B 37/04

(54) **ROTATABLE, WINGED STRUT CHANNEL CONNECTOR**

(71) Applicant: Hilti Aktiengesellschaft, 9494 Schaan (LI)
(72) Inventor: Fasser, Simon, 9493 Mauren (LI)
(74) Representative: Hilti Aktiengesellschaft Corporate Intellectual Property

(57) **Abstract**

The invention relates to a connector for a strut channel, comprising a channel nut for engaging into the strut channel, wherein the channel nut has a threaded bore having a bore axis, and a handling element, which is connected to the channel nut, for positioning and pre-fixing the channel nut inside of the strut channel, wherein the handling element has two diametrically protruding gripping flaps, which can, for gripping the gripping flaps, be hinged from a neutral configuration, in which the gripping flaps extend generally transversely with respect to the bore axis, towards one another and away from the channel nut. According to the invention, the handling element is connected to the channel nut so as to be rotatable with respect to the channel nut about the bore axis.

## Description

The invention relates to a connector for a strut channel according to the preamble of claim 1. A connector of this type comprises a channel nut for engaging into the strut channel, wherein the channel nut has a threaded bore having a bore axis, and further comprises a handling element, which is connected to the channel nut, for positioning and pre-fixing the channel nut inside of the strut channel, wherein the handling element has two diametrically protruding gripping flaps, which can, for gripping the gripping flaps, be hinged from a neutral configuration, in which the gripping flaps extend generally transversely with respect to the bore axis, towards one another and away from the channel nut.

Closest US5628598 A describes a connector for a strut channel comprising a channel nut and a handling element, which is connected to the channel nut, for handling and installing the channel nut. The handling element is flexible between a U-shaped configuration for grabbing the handling insert and a locking configuration, in which it engages into the mouth of a strut channel.

US4666355 A describes another connector for a strut channel. This connector comprises a spring clip, which is intended to abut on the outside of the strut channel, and a channel nut, which is rotatable with respect to the spring clip. During installation, the spring clip is positioned on the strut channel and the channel nut is then rotated, whilst the spring clip remains generally stationary.

US2015233410A, US4840525 A, EP2816243B1, EP1039155A2, EP1026415B1 and DE19821255A1 describe further connectors for strut channels. In each case, an element intended to be positioned on the outside of the strut channel and the channel nut are connected to rotate, so that the channel nut can be brought into an engagement position by rotating the outside element.

EP1357304 B1 describes connectors for strut channels having specially-shaped spring arms that cause automatic rotation of channel nuts when the connectors are axially pushed into the strut channel.

It is an object of the invention to provide a connector that is, whilst being particularly reliable, easy to operate, high-performing and/or easy to manufacture, particularly versatile.

This object is achieved by a connector according to claim 1. Dependent claims refer to preferred embodiments of the invention.

According to the invention, the handling element is connected to the channel nut so as to be rotatable with respect to the channel nut about the bore axis.

Thus, the connection between the handling element and the channel nut provides a rotational degree of freedom.

The handling element of the channel nut has two diametrically protruding gripping flaps, which can be brought into a U-shaped configuration. It was found that such a U-shaped configuration, in addition to improve gripping, can also reduce the size of the geometric outline of the handling element. This, in term, can allow the handling element to be partly inserted into the mouth of a strut channel when the channel nut is installed on the strut channel. Inserting the handling element into the mouth during installation can yield a particularly high insertion depth of the channel nut, which can permit to employ the connector on strut channels that have a high toothing, or which have no toothing at all and which require V-shaped indentations on the channel nut to grasp the channel lips. It was further found that when the mouth of the strut channel is narrow, insertion of the handling element is only possible when the angle between the apex of the U-shaped configuration and the longitudinal extension of the strut channel is small. However, since the apex of the U-shaped configuration runs perpendicular to the longitudinal direction of the handling element, this means that the handling element needs to be orientated at large angles, in particular more-or-less perpendicular, to the longitudinal extension of the strut channel at the beginning of the installation process. Should the strut channel moreover be narrow, so that the channel nut already locks at small angles of rotation, the angle of rotation of the handling element connected to the channel nut will be correspondingly limited when installing the channel nut. As a consequence, the handling element will, when the channel nut is locked, come to rest in a position in which it still encloses a relatively large angle with the longitudinal extension of the strut channel. This, in term, might lead to constructional constraints, for example when the handling element should end up aligned with the longitudinal extension of the strut channel and/or flush with respect to the strut channel.

The invention now provides that the handling element is rotatable with respect to the channel nut. This allows to reposition the handling element during installation even after the channel nut has reached its locking position. In particular, the above-mentioned large angles of the handling element with respect to the longitudinal extension of the strut channel can be overcome by further rotating the handling element, even after the channel nut has locked. This leads to a particular versatile connector, in particular with a view to narrow strut channels that also require deep insertion of the channel nut into the strut channel.

A strut channel, for which the connector is intended, has an oblong channel mouth, which provides an opening into the strut channel, and two channel lips, which flank the channel mouth. In particular, the strut channel can have a generally C-shaped cross section.

The channel nut is longer, with width measured in the longitudinal direction of the channel nut, than it is wide, with width measured in the lateral direction of the channel nut, wherein both the longitudinal direction and the lateral direction of the channel nut extend perpendicularly to the bore axis of the threaded bore of the channel nut. The channel nut thus has an oblong shape, which allows the channel nut to be inserted through the mouth of the strut channel by aligning it such that its longitudinal direction is orientated generally parallel to the longitudinal direction of the mouth of the strut channel, and which allows the channel nut to engage behind the channel lips of the strut channel by rotating the channel nut about the bore axis out of alignment with the mouth of the strut channel.

The handling element is connected to the channel nut, so that when the handling element is displaced, the channel nut is displaced accordingly. This allows to bring the channel nut into a desired position with respect to the strut channel by manipulating the handling element. In particular, the handling element allows to position the channel nut inside of the strut channel and to pre-fix the channel nut inside of the strut channel. In a pre-fixed configuration, the channel nut already engages behind the channel lips, but is still relatively loosely fixed in this position, in particular by means of elasticity of the handling element abutting against the outside of the strut channel. Tight fixation can subsequently be accomplished by means of a threaded rod threaded into the threaded bore of the channel nut, which forces the channel nut tightly against the lips of the strut channel.

The connector can in particular be intended for connecting an attachment part to the strut channel, wherein the attachment part rests against the channel lips from the outside of the channel, and wherein the attachment part is connected to the channel nut via the threaded rod threaded into the threaded bore of the channel nut. The bore axis extends along the threaded bore in the center thereof.

The channel nut preferably consists of metal, preferably steel, which might also be coated. The handling element preferably consists of a plastic material, which can provide the necessary elasticity and/or flexibility.

The gripping flaps protrude on opposite sides of the handling element and are intended for manual gripping. They can be hinged from a generally flat neutral configuration towards one another and away from the channel nut into U-shaped configurations, which allow gripping, but also insertion of the handling element into the mouth of the strut channel.

Preferably, the channel nut comprises a plug collar that surrounds the bore axis, and the handling element comprises a socket sleeve that surrounds the bore axis, wherein the plug collar is arranged, in particular rotatably, within the socket sleeve. This can provide a particular reliable and/or easy-to-manufacture rotatable connection between the channel nut and the handling element. The plug collar and/or the socket sleeve can, in particular, be arranged coaxially with respect to the bore axis. The threaded bore extends through the plug collar and, preferably, the thread of the threaded bore extends into the plug collar.

In particular, the handling element is connected to the channel nut so as to resist axial, with respect to the bore axis, separation. Preferentially, the socket sleeve comprises a first cam slot that surrounds the bore axis, and the plug collar comprises a first cam projection, which projects into the first cam slot, and which is guided by the first cam slot. This can provide a particular reliable and yet easy-to-manufacture axially fixed and rotatable connection between the channel nut and the handling element.

Advantageously, the first cam slot is arcuate so as to provide at least one end stop for the first cam projection for delimiting rotation of the handling element with respect to the channel nut about the bore axis. Accordingly, the cam slot does not span a full circle, but only a part of a full circle, and it provides at least one end stop, preferably two opposite end stops, for the first cam projection. When the first cam projection abuts against such an end stop, rotation of the handling element with respect to the channel nut about the bore axis is stopped. This embodiment can further facilitate installation of the connector, as it can ensure proper positioning of the handling element.

The first cam slot is preferably level with respect to the bore axis. Accordingly, camming of the first cam projection in the first cam slot can enforce a rotational-only movement of the handling element with respect to the channel nut, with only little or no axial component. This can further enhance operation.

The first cam slot is, preferably, a through slot, i.e. it extends all the way through the socket sleeve. This can further facilitate manufacturing, in particular if the handling element is an injection molded part, and/or it can also provide a visual indicator of the configuration of the connector in a particularly easy manner.

Advantageously, the first cam projection is located adjacent to the face of the plug collar. In particular, the first cam projection can be manufactured by locally upsetting the face of the plug collar, i.e. by locally upsetting the free end of the plug collar.

According to another preferred embodiment of the invention, the socket sleeve comprises a second cam slot that surrounds the bore axis, and the plug collar has a second cam projection, which projects into the second cam slot, and which is guided by the second cam slot. Accordingly, there are at least two, preferably precisely two, camming interfaces. This can be advantageous from a force transfer point of view, thereby providing a particularly robust and high-performance connector. It is particularly preferred that the first cam projection and the second cam projection are arranged diametrically on the plug collar. The resulting high degree of symmetry can further improve robustness and performance. Preferably, features and/or properties described here in connection with the first cam slot can also apply to the second cam slot and/or features and/or properties described here in connection with the first cam projection can also apply to the second cam projection.

It is particularly preferred that the handling element has a first detent for releasably holding the connector in an installation rotational configuration. This can, in a particularly easy manner, ensure that the connector is in an appropriate configuration at the beginning of the installation process. In particular, the detent can counteract unwanted premature rotation of the connector during shipping. Thus, reliability and ease of use can be further improved. In particular, a detent can be understood to be a device for positioning and holding one mechanical part in relation to another in a manner such that the device can be released by force applied to one of the parts. The installation rotational configuration is the configuration intended for inserting the channel nut into the strut channel.

The detent can for example be a catch, dog, or spring-operated ball. It is particularly preferred that the detent comprises a first constriction of the first cam slot, for releasably holding the first cam projection. Accordingly, the detent comprises a local narrowing of the first cam slot, which can releasably hold the first cam projection. This can be particularly easy to manufacture whilst providing particularly good reliability. It is particularly preferred that the constriction is a double-sided constriction, i.e. a waist. This can further improve operation.

The channel nut preferentially has indentations for receiving lips of a strut channel. As already hinted at above, indentations for receiving the lips of a strut channel require the channel nut to be pushed relatively deep into the strut channel, since the edges of the indentations have to be positioned deeper in the channel than the channel lips in order to allow the channel lips to enter the indentations. As the connector allows particularly deep insertion of the channel nut, it is particularly well suited to be used in connection with indented channel nuts.

Advantageously, the handling element comprises an axial spring section for pre-tensioning the channel nut against the strut channel. This can further improve operation. Preferably, the axial spring section is formed between the gripping flaps on the one hand and the socket sleeve on the other hand.

The invention is explained in greater detail below with reference to preferred exemplary embodiments, which are depicted schematically in the accompanying drawings. Individual features of the exemplary embodiments presented below can be implemented either individually or in any combination within the scope of the present invention.

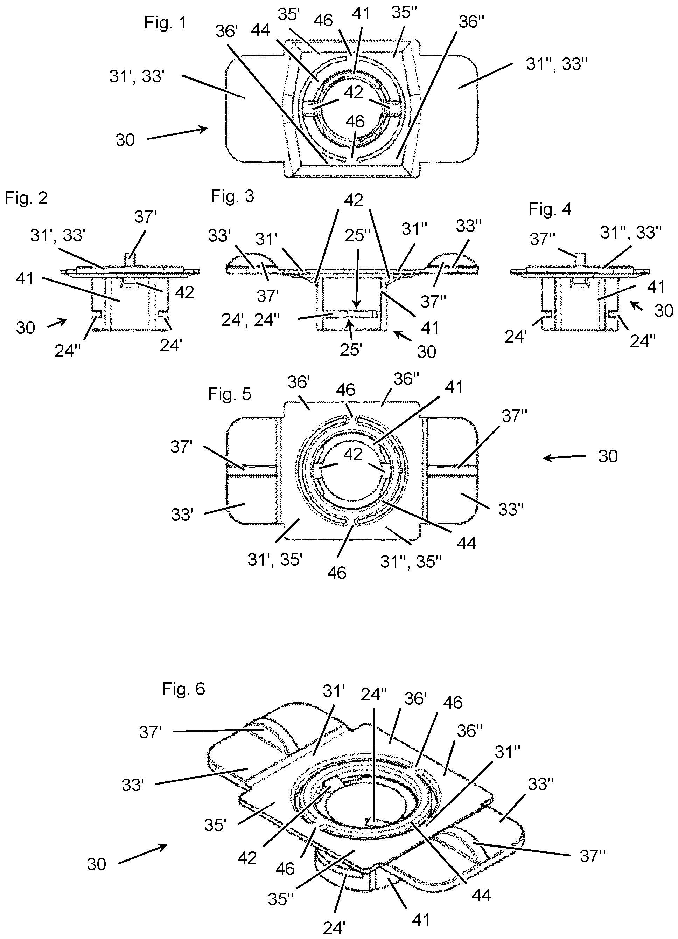

Figure 1 is a bottom view of the handling element of a connector.
Figure 2 is a left side view of the handling element of figure 1.
Figure 3 is a front view of the handling element of figures 1 and 2.
Figure 4 is a right side view of the handling element of figures 1 to 3.
Figure 5 is a top view of the handling element of figures 1 to 4.
Figure 6 is an isometric view of the handling element of figures 1 to 5.

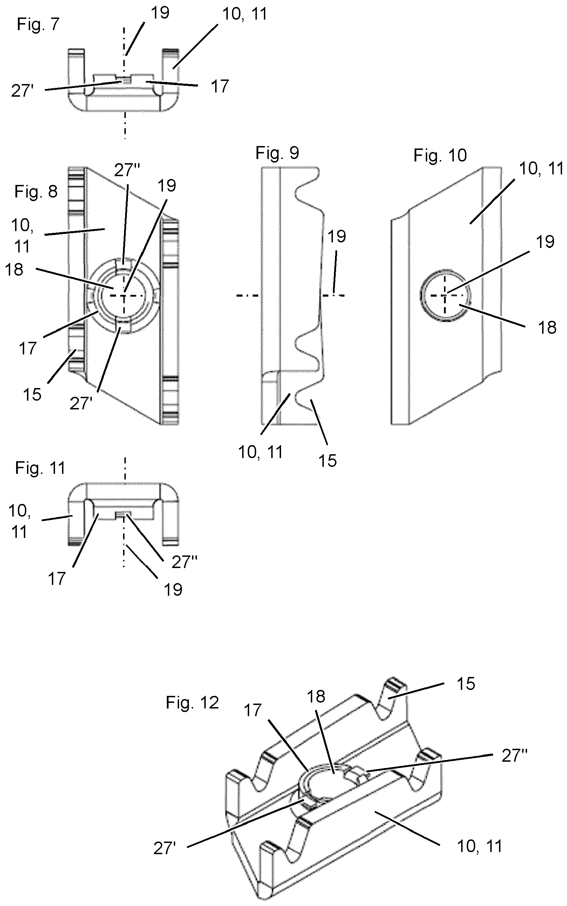

Figure 7 is a left side view of the channel nut of a connector.
Figure 8 is a top view of the channel nut of figure 7.
Figure 9 is a front view of the channel nut of figures 7 and 8.
Figure 10 is a bottom view of the channel nut of figures 7 to 9.
Figure 11 is a right side view of the channel nut of figures 7 to 10.
Figure 12 is an isometric view of the channel nut of figures 7 to 11.
Figure 13 is a bottom view of a connector comprising the channel nut of figures 7 to 12 and the handling element of figures 1 to 6, with the connector in its installation rotational configuration.
Figure 14 is a front view of the connector of figure 13, with the connector in its installation rotational configuration.
Figure 15 is a left side of the connector of figures 13 and 14, with the connector in its installation rotational configuration.
Figure 16 is a rear view of the connector of figures 13 to 15, with the connector in its installation rotational configuration.
Figure 17 is a top view of the connector of figures 13 to 16, with the connector in its installation rotational configuration.
Figure 18 is an isometric view of the connector of figures 13 to 17, with the connector in its installation rotational configuration.
Figure 19 is an isometric view of the connector of figures 13 to 18, with the connector in its installation rotational configuration and the gripping flaps bent upwards into a U-shaped configuration.
Figure 20 is a bottom view of the connector of figures 13 to 19, with the connector in its final rotational configuration.
Figure 21 is a front view of the connector of figures 13 to 20, with the connector in its final rotational configuration.
Figure 22 is a left side view of the connector of figures 13 to 21, with the connector in its final rotational configuration.
Figure 23 is a rear view of the connector of figures 13 to 22, with the connector in its final rotational configuration.
Figure 24 is a top view of the connector of figures 13 to 23, with the connector in its final rotational configuration.
Figure 25 is an isometric view of the connector of figures 13 to 24, with the connector in its final rotational configuration.
Figure 26 shows consecutive steps of the installation process of the connector of figures 13 to 25 on a strut channel, in top view in the top row of figure 26, and in side view in the bottom row of figure 26.

The figures show an example of an inventive connector for a strut channel. The connector comprises a channel nut 10, which channel nut 10 comprises an engagement body 11 and a plug collar 17 projecting from the engagement body 11. The engagement body 11 and the plug collar 17 are monolithic and consist of metal, in particular steel. An internally threaded bore 18 for threadedly receiving a not shown threaded rod extends, along bore axis 19, through the channel nut 10, in particular through the plug collar 17 thereof. The plug collar 17 is aligned co-axially with respect to the bore axis 19.

The engagement body 11 is longer than it is wide (with the length and the width both extending perpendicular to the bore axis 19), so that the engagement body 11 can be inserted through the mouth of a strut channel and locked at the lips of the strut channel by rotating the engagement body 11 about the bore axis 19. The engagement body 11 is provided with V-shaped indentations 15 for receiving the lips of the strut channel. The V-shaped indentations 15 are provided in two separate flanges of the engagement body 11. These two separate flanges are connected by a flat web of the engagement body 11. The plug collar 17 is provided on said flat web, and the internally threaded bore 18 and bore axis 19 extend through said flat web. In the shown embodiment, the flat web of the engagement body 11 has, by way of example, an essentially angled-parallelogram shaped outline, but other outlines could also be envisaged.

The connector further comprises a handling element 30, which is connected to the channel nut 10. In particular, the handling element 30 comprises a socket sleeve 41, which is arranged coaxially with the bore axis 19, and in which the plug collar 17 of the channel nut 10 is received in such a way that the plug collar 17 can rotate within the socket sleeve 41 about the bore axis 19. The handling element 30 further comprises a spring ring 44 and two inner connector lugs 42, which radially project from the socket sleeve 41, diametrically with respect to the bore axis 19. Each of the inner connector lugs 42 interconnects the socket sleeve 41 and the spring ring 44. The spring ring 44 is preferably a circular ring and arranged coaxially with the bore axis 19.

The handling element 30 further comprises two outer connector lugs 46, which radially project from the spring ring 44, diametrically with respect to the bore axis 19. The outer connector lugs 46 and the inner connector lugs 42 are angularly offset by 90° about the bore axis 19. Each of the outer connector lugs 46 interconnects the spring ring 44 with the remainder of the handling element 30, in particular with prongs 35 and 36, as will be described in more detail further below.

The handling element 30 further comprises a first gripping flap 31' and a second gripping flap 31", which are arranged diametrically with respect to the bore axis 19. The first gripping flap 31' comprises a first tab 33', which is, by way of example, generally flat and has generally rectangular outline. The first gripping flap 31' further comprises a first fore prong 35' and a first rear prong 36', which both project from the first tab 33' towards the second gripping flap 31" and form a bifurcated structure. In analogy, the second gripping flap 31" comprises a second tab 33", which is, by way of example, generally flat and has generally rectangular outline. The second gripping flap 31" further comprises a second fore prong 35" and a second rear prong 36", which both project from the second tab 33" towards the first gripping flap 31' and form a bifurcated structure.

At their respective tips, the first fore prong 35' and the second fore prong 35" are interconnected with each other and, laterally, connected to one of the outer connector lugs 46. At their respective tips, the first rear prong 36' and the second rear prong 36" are interconnected with each other and, laterally, connected to the other of the outer connector lugs 46.

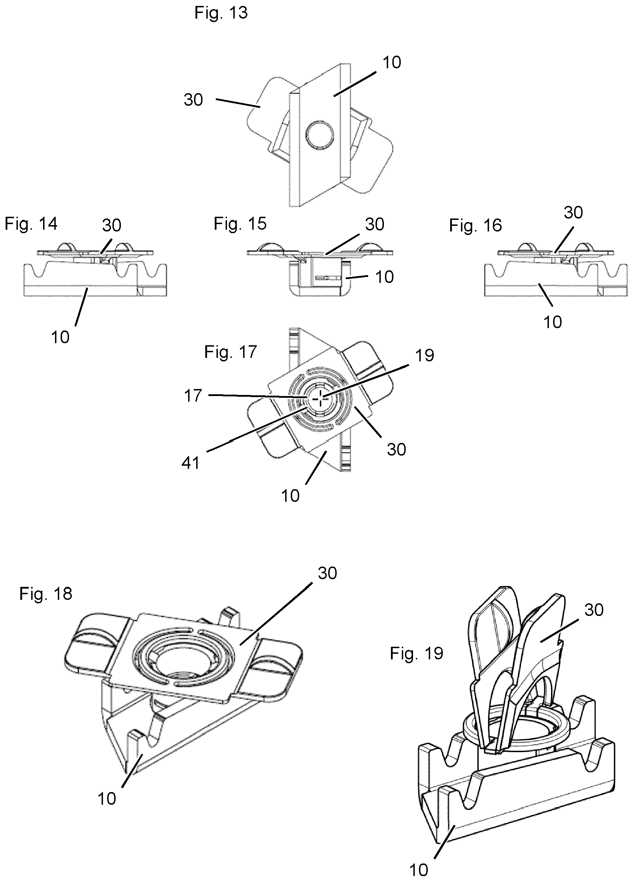

The handling element 30 can have a neutral configuration, in which the gripping flaps 31' and 31" are generally aligned, located in a common plane and orientated transversely to the bore axis 19, as for example shown in figure 18. However, the handling element 30 is sufficiently flexible so that the gripping flaps 31' and 31" can, as for example shown in figure 19, also be brought into U-shaped configurations, in which the gripping flaps 31' and 31" are further away from the channel nut 10 and closer together as compared to the neutral configuration. The outer connector lugs 46 form hinge points, around which the gripping flaps 31' and 31" can be bent between different U-shaped configurations and also into the neutral configuration. The apex of the different U-shaped configurations will be aligned with the outer connector lugs 46.

The handling element 30 also comprises a first fin 37', which projects orthogonally from the first tab 33', as well as a second fin 37", which projects orthogonally from the second tab 33". These fins 37', 37" can be manually engaged in order to manually rotate the handling element 30, in particular when the handling element 30 is in its neutral configuration.

All of the parts of the handling element 30 are monolithic and in particular consist of a plastic material.

The channel nut 10 also comprises a first cam projection 27' and a second cam projection 27", which both project radially (with respect to the bore axis 19) from the plug collar 17. In particular, the first cam projection 27' and the second cam projection 27" can be arranged diametrically on the channel nut 10. The first cam projection 27' and the second cam projection 27" are located adjacent to the face of the plug collar 17, i.e. adjacent to the free end of the plug collar 17 which is remote from the engagement body 11. This adjacent location allows to manufacture the cam projections 27' and 27" for example by upsetting the face of the plug collar 17. Preferably, the plug collar 17 has two indentations within its face, wherein each indentation is located adjacent to one of the cam projections 27' and 27". These indentations originate from the upsetting process for manufacturing the cam projections 27' and 27".

The socket sleeve 41 of the handling element 30, in which the plug collar 17 of the engagement body 11 is received, comprises a first cam slot 24' and a second cam slot 24". Both the first cam slot 24' and a second cam slot 24" are arcuate and surround the bore axis 19. The first cam projection 27' engages into the first cam slot 24' and the second cam projection 27" engages into the second cam slot 24". This engagement locks the engagement body 11 axially (with respect to the bore axis 19) on the handling element 30

Each of the cam slots 24' and 24" is level, with respect to the bore axis 19, i.e. each of the cam slots 24' and 24" lies in a virtual plane that extends perpendicular to the bore axis 19. Accordingly, engagement of the cam projections 27' and 27" in the respective cam slots 24' and 24" essentially blocks axial movement of the handling element 30 with respect to the channel nut 10, only permitting rotation of the handling element 30 with respect to the channel nut 10. In other words, possible motion of the handling element 30 with respect to the channel nut 10 is generally circular, and not helical.

The cam slots 24' and 24" are also level with one another, i.e. both cam slots 24' and 24" lie in a common virtual plane that extends perpendicular to the bore axis 19. Each of the cam slots 24' and 24" is a through slot, i.e. each of the cam slots 24' and 24" extends all the way through the wall of the socket sleeve 41.

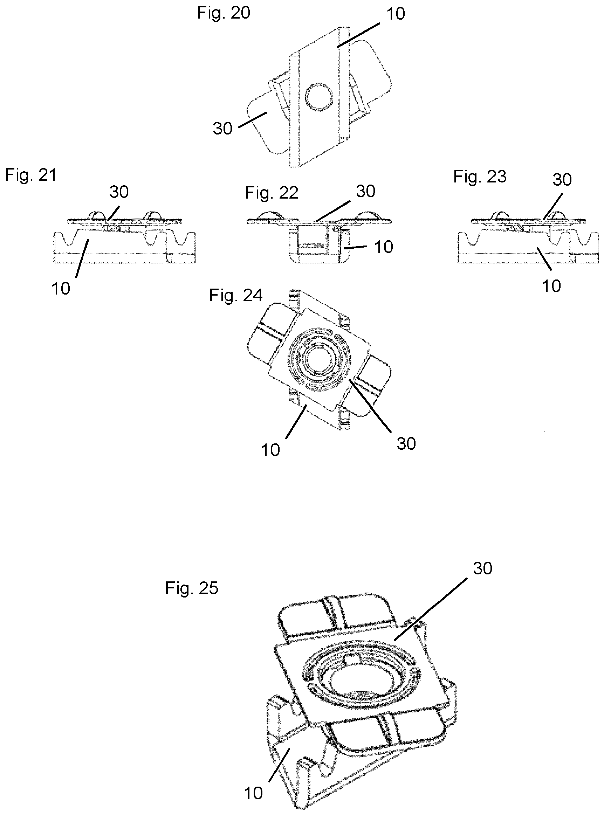

The first cam slot 24' has two opposite end stops. When the first cam projection 27' abuts against a first of said two end stops, the connector is in an installation rotational configuration, which configuration is shown in figures 13 to 19. This is the configuration intended for inserting the channel nut 10 into the strut channel. When the first cam projection 27' abuts against a second of said two end stops, the connector is in a final rotational configuration, which configuration is shown in figures 20 to 25. This is the configuration where no further rotation of the handling element 30 with respect to the channel nut 10 is intended during installation of the connector. In analogy, the second cam slot 24" has two opposite end stops. When the second cam projection 27" abuts against a first of said two end stops, the connector is in the installation rotational configuration. When the second cam projection 27" abuts against the second of said two end stops, the connector is in the final rotational configuration.

The first cam slot 24' has a first constriction 25', which forms a detent for arresting the first cam projection 27' and thereby releasably rotationally locking the connector in in the installation rotational configuration. In analogy, the second cam slot 24" has a second constriction 25", which forms a detent for arresting the second cam projection 27" and thereby releasably rotationally locking the connector in the installation rotational configuration. Both the first constriction 25' and the second constriction 25" are waists in the present embodiment, i.e. they each project from opposite sides into the respective first cam slot 24' or second cam slot 24", respectively.

The inner connector lugs 42, the spring ring 44 and the outer connector lugs 46 form an axial spring section, which allows to elastically displace the socket sleeve 41 and thus the engagement body 11 received therein with respect to the gripping flaps 31', 31". The axial spring section can thus pre-tension the channel nut 10 against the strut channel.

In particular, the connector, or at least the handling element 30 and/or the channel nut 10, have 2-fold rotationally symmetry with respect to the bore axis 19, i.e. rotation by 180° about the bore axis 19 projects these respective items onto themselves.

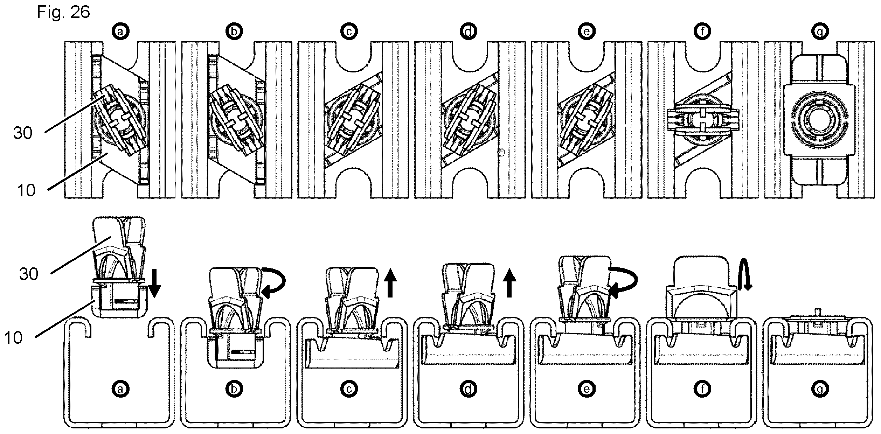

The installation process for pre-fixing the connector on a strut channel is shown in figure 26. The top row of figure 26 shows different installation states of the connector on a strut channel in top view, from outside of the channel, and the bottom row of figure 26 shows the same installation states as the top row, however in side view.

When installed, the connector, which is in its installation rotational configuration and neutral configuration, is grasped at the handling element 30, in particular at the gripping flaps 31', 31" thereof. Bending the gripping flaps 31', 31" into a U-shaped configuration, as illustrated by figure 19 and by items (a) in figure 26, can reduce the lateral dimension of the connector, which allows to insert the channel nut 10 deep into the mouth of a strut channel, as illustrated by items (b) in figure 26.

Following insertion of the channel nut 10 into the strut channel, the handling element 30 is manually rotated about the bore axis 19. Due to the rotational locking of the channel nut 10 to the handling element 30 by means of the detent, the connector will remain in the installation rotational configuration during this manual rotation, and the channel nut 10 will thus follow the rotation of the handling element 30. Rotation is continued until the channel nut 10 abuts against the side walls of the strut channel. The resulting configuration is illustrated by items (c) in figure 26.

Subsequently, the handling element 30 is pulled axially, with respect to the bore axis 19, out of the channel. The channel nut 10 connected to the handling element 30 follows this movement, and the lips of the strut channel are thereby received in the indentations 15 of the channel nut 10, as illustrated by items (d) and (e) in figure 26.

Thereafter, rotation of the handling element 30 about the bore axis 19 is continued. Since the channel nut 10 now abuts against the walls of the strut channel and/or since the channel nut 10 is now, at its indentations 15, interlocked with the lips of the strut channel, the channel nut 10 cannot follow this further rotation anymore. The detent between the channel nut 10 and the handling element 30, formed at the constrictions 25' and 25", therefore disengages. As a consequence, the handling element 30 rotates with respect to the channel nut 10 about the bore axis 19, until the channel nut 10 reaches its final rotational configuration, as illustrated by items (f) in figure 26. In the final rotational configuration, the cam projections 27' and 27" about against the end stops of their respective cam slots 24' or 24", respectively, which arrests further rotation of the handling element 30 with respect to the channel nut 10.

Finally, the gripping flaps 31', 31" are bent towards the strut channel into a configuration shown by items (g) in figure 26. In this state, the connector is pre-fixed in the strut channel, since the handling element 30, in particular the gripping flaps 31', 31" thereof, abuts against the outside of the strut channel, whereas the engagement body 11 of the channel nut 10 abuts against the inside if the strut channel. Thus, the strut channel, in particular the lips thereof, are clasped by the connector. Final fixation can subsequently be achieved by screwing a threaded rod into the threaded bore 18 and by tightly pulling the engagement body 11 against the lips of the strut channel by means of the threaded rod.

Through bending of the flaps 31', 31" into a U-shaped configuration at the beginning of the installation process, a particularly good visual accessibility can be achieved. The fins 37', 37" can provide an additional indicator for correct installation: Only when the connector is correctly installed it is possible to push them into the mouth of the strut channel. The cam mechanism provided by the cam projections 27', 27" and the cam slots 24', 24", respectively, delimits rotation of the handling element 30 with respect to the channel nut 10 and defines the installation rotational configuration and the final rotational configuration. In particular, in the installation rotational and U-shaped configurations, insertion of the channel nut 10 into the strut channel is not significantly hindered by the outer geometry of the handling element 30. In the installation rotational configuration, the detent mechanism ensures that the channel nut 10 follows rotation of the handling element 30, in particular rotation by 60°. The detent can then be overcome by a higher torque in order to achieve the final rotational configuration and locking of the connector. As an alternative or addition to the constrictions 25' and 25", the detent could also include spring elements. The described mechanisms ensure, with haptic feedback, that the connector is located in the intended configurations, leading to particularly good installation reliability.

## Claims

1. Connector for a strut channel, comprising
- a channel nut (10) for engaging into the strut channel, wherein the channel nut (10) has a threaded bore (18) having a bore axis (19), and
- a handling element (30), which is connected to the channel nut (10), for positioning and pre-fixing the channel nut (10) inside of the strut channel,
- wherein the handling element (30) has two diametrically protruding gripping flaps (31', 31"), which can, for gripping the gripping flaps (31', 31"), be hinged from a neutral configuration, in which the gripping flaps (31', 31") extend generally transversely with respect to the bore axis (19), towards one another and away from the channel nut (10),
**characterized in that**
the handling element (30) is connected to the channel nut (10) so as to be rotatable with respect to the channel nut (10) about the bore axis (19).

2. Connector according to claim 1,
**characterized in that**
the channel nut (10) comprises a plug collar (17) that surrounds the bore axis (19), and the handling element (30) comprises a socket sleeve (41) that surrounds the bore axis (19),
wherein the plug collar (17) is arranged within the socket sleeve (41).

3. Connector according to claim 2,
**characterized in that**
the socket sleeve (41) comprises a first cam slot (24') that surrounds the bore axis (19), and
the plug collar (17) comprises a first cam projection (27'), which projects into the first cam slot (24'), and which is guided by the first cam slot (24').

4. Connector according to claim 3,
**characterized in that**
the first cam slot (24') is arcuate so as to provide at least one end stop for the first cam projection (27') for delimiting rotation of the handling element (30) with respect to the channel nut (10) about the bore axis (19).

5. Connector according to any of claims 3 or 4,
**characterized in that**
the first cam slot (24') is level with respect to the bore axis (19).

6. Connector according to any of claims 3 to 5,
**characterized in that**
the first cam slot (24') is a through slot.

7. Connector according to any of claims 3 to 6,
**characterized in that**
the first cam projection (27') is located adjacent to the face of the plug collar (17).

8. Connector according to any of claims 3 to 7,
**characterized in that**
the socket sleeve (41) comprises a second cam slot (24") that surrounds the bore axis (19), and
the plug collar (17) has a second cam projection (27"), which projects into the second cam slot (24"), and which is guided by the second cam slot (24"),
wherein the first cam projection (27') and the second cam projection (27") are arranged diametrically on the plug collar (17).

9. Connector according to any of the proceeding claims,
**characterized in that**
the handling element (30) has a first detent for releasably holding the connector in an installation rotational configuration.

10. Connector according to claim 9 in connection with any of claims 3 to 8,
**characterized in that**
the detent comprises a first constriction (25') of the first cam slot (24'), for releasably holding the first cam projection (27').

11. Connector according to any of the preceding claims,
**characterized in that**
the channel nut (10) has indentations (15) for receiving lips of a strut channel

12. Connector according to any of the proceeding claims,
**characterized in that**
the handling element (30) comprises an axial spring section for pre-tensioning the channel nut (10) against the strut channel.
